# EUROPÄISCHE PATENTANMELDUNG

(11) **EP 4 707 209 A1**
(43) Veröffentlichungstag der Anmeldung: **11.03.2026**
(21) Anmeldenummer: 25198274.0
(22) Anmeldetag: 26.08.2025
(51) Int. Cl.: B65H 29/24

(54) **VORRICHTUNG UND VERFAHREN FÜR EINE ÜBERGABE VON ZUSCHNITTEN**

(30) Priorität: 03.09.2024 DE 102024125067
(71) Anmelder: OPTIMA life science GmbH, 74523 Schwäbisch Hall (DE)
(72) Erfinder: Lutz, Michael, 74523 Schwäbisch Hall (DE); Jansen, Johannes, 74523 Schwäbisch Hall (DE)
(74) Vertreter: Patentanwälte Ruff, Wilhelm, Beier, Dauster & Partner mbB

(57) **Zusammenfassung**

Die Erfindung betrifft eine Vorrichtung und ein Verfahren für eine Übergabe von Zuschnitten an eine Übergabestrecke, insbesondere für eine Übergabe von Zuschnitten (10) an eine Materialbahn, eine Transportbahn (14), eine rotierende Walze und/oder an entlang einer Transportstrecke transportierte Produkte (12), die Vorrichtung (1) umfassend ein Positioniersystem (2) mit mindestens zwei, insbesondere drei oder mehr, entlang einer umlaufenden Bahn bewegbaren Schlitten (20) und mit einem Antriebssystem (24), wobei die Schlitten (20) jeweils eine Produktaufnahme (22) aufweisen und eingerichtet sind, um jeweils einen Zuschnitt (10) an der Produktaufnahme (22) aufzunehmen, den Zuschnitt (10) ortsfest an der Produktaufnahme gehalten zu transportieren, und den Zuschnitt (10) an die Übergabestrecke zu übergeben, und wobei das Antriebssystem (24) eingerichtet ist, um die Schlitten (20) entlang der umlaufenden Bahn zumindest abschnittsweise unabhängig voneinander zu bewegen.

## Beschreibung

Die Erfindung betrifft eine Vorrichtung und ein Verfahren für eine Übergabe von Zuschnitten an eine Übergabestrecke. Die Erfindung betrifft insbesondere eine Vorrichtung und ein Verfahren für eine Übergabe von Zuschnitten an eine Materialbahn, eine Transportbahn, eine rotierende Walze und/oder an entlang einer Transportstrecke transportierte Produkte.

Es ist bekannt, Produkte, wie beispielsweise jedoch nicht abschließend Membran-ElektrodenAnordnung (Engl. membrane electrode assembly, kurz MEA) oder Teile davon für eine Brennstoffzelle, eine Elektrolysezelle oder eine Redox Flow-Zelle (Flüssigbatterie) oder Membran-basierte Luftbefeuchter oder auch Produkte für die Wundversorgung oder transdermale therapeutische Systeme, aus Materialbahnen herzustellen und/oder zu bearbeiten. Derartige aus Materialbahnen hergestellte und/oder bearbeitete Produkte werden hier auch als in der Bahn hergestellte und/oder bearbeitete Produkte bezeichnet.

Für verschiedene Anwendungen sind in der Bahn hergestellte und/oder bearbeitete Produkte mit Zuschnitten auszustatten, wobei die Zuschnitte beispielsweise in einer weiteren Materialbahn rotativ erzeugt und auf einer als Hauptbahn bezeichneten Materialbahn abgelegt werden. Weiter ist es bekannt, aus Materialbahnen hergestellte Zuschnitte oder Zuschnitte aus einem Vorrat auf einer Transportbahn für einen Weitertransport abzulegen und/oder auf entlang einer Transportstrecke transportierten Produkten, beispielsweise für ein Etikettieren und/oder für einen Aufbau eines Laminats entlang der Transportstrecke, abzulegen.

Für eine Übergabe der Zuschnitte an eine Übergabestrecke sind sogenannte Vakuumwalzen, auch als Vakuumzylinder bezeichnet, bekannt. Als Vakuumwalzen werden Walzen bezeichnet, die an ihren Mantelflächen mit einer porösen oder löchrigen Oberfläche versehen sind, durch welche Unterdruck bereitgestellt wird.

Beispielsweise zeigt DE102007016426 A1 ein Verfahren und eine Vorrichtung zum Etikettieren von Gegenständen, wie Flaschen oder anderen Verpackungsbehältern, wobei in einem Walzenspalt zwischen zwei rotierenden Walzen Etiketten aus einem bedruckten Etikettenband aus einem Papier- oder Folienmaterial ausgestanzt werden, die ausgestanzten Etiketten gegen eine erste als Vakuumwalze gestaltete Walze angesaugt und von dieser ersten Walze mitgeführt werden, und mittels dieser ersten Walze oder einer zusätzlichen Vakuumwalze, an die zu etikettieren Gegenstände übergeben werden.

WO 99/62801 A2 beschreibt eine Vorrichtung zum Übergeben von mehrlagigen Zuschnitten an eine Hauptbahn, umfassend eine ersten Vakuum-Schneidwalze und einer ersten Gegenwalze zum Erzeugen von Zuschnitten aus einer ersten Materialbahn und eine Vakuumtransferwalze zum Übernehmen der Zuschnitte von der ersten Vakuum-Schneidwalze und zum Übergeben der Zuschnitte an die Hauptbahn, wobei eine Transportgeschwindigkeit der Hauptbahn höher ist als eine Transportgeschwindigkeit der ersten Vakuum-Schneidwalze und die Vakuumtransferwalze mit einer variablen Geschwindigkeit rotiert, um die Zuschnitte von der ersten Vakuum-Schneidwalze mit einer der Transportgeschwindigkeit der Vakuum-Schneidwalze entsprechenden Geschwindigkeit zu übernehmen und um die Zuschnitte an die Hauptbahn mit einer der Transportgeschwindigkeit der Hauptbahn entsprechenden Geschwindigkeit zu übergeben.

Weiter ist es bekannt, auf einer Vakuumwalze mittels einer Schneidwalze Zuschnitte zu erzeugen, welche von der Vakuumwalze an eine Vakuum-Transferwalze übergeben und von der Vakuum-Transferwalze auf einer Hauptbahn abgelegt werden. Um die Zuschnitte auf einen Abstand zu bringen, mit welchem die Zuschnitte auf der Hauptbahn abgelegt werden sollen, insbesondere um einen Abstand der Zuschnitte zu vergrößern, ist es bekannt, eine Übertragung von einer langsam rotierenden Vakuumwalze an eine schneller rotierende Vakuum-Transferwalze vorzusehen und/oder bei der Übertragung von der Vakuumwalze auf die Vakuum-Transferwalze eine Geschwindigkeit der Vakuumwalze temporär zu reduzieren.

Weiter ist es bekannt, die auf der Hauptbahn abgelegten Zuschnitte mit einem Sensorsystem oder einem Bild gebenden System zu vermessen, Positionsabweichungen zu ermitteln und diese ermittelten Positionsabweichungen an eine Regelung für eine Positionskorrektur nachfolgender Ablagevorgänge zu übertragen.

Bei der Übergabe von der Vakuumwalze auf die zumindest temporär schneller rotierende Vakuum-Transferwalze können Schlupfeffekte auftreten, welche eine Positionsgenauigkeit der Zuschnitte auf der Hauptbahn durch Verschieben oder Verdrehen beeinträchtigen. Um unkontrollierbare Schlupfeffekte die zu statistischen Positionsabweichungen führen weitgehend zu kompensieren, ist es bekannt, für eine Positionskorrektur nachfolgender Ablagevorgänge eine sogenannten Trendregelung einzusetzen, wobei eine Anzahl an Zuschnitten vermessen und deren Positionsabweichungen gemittelt wird. Bei einem Maschinenanlauf nach einem Neustart oder nach sprunghaften Änderungen wie sie beispielsweise bei einem Versatz in einem Spleißbereich einer der verarbeiteten oder bearbeiteten Materialbahnen auftreten, kann dies zu unerwünschten Mengen an Ausschuss führen.

### AUFGABE UND LÖSUNG

Es sind Aufgaben der Erfindung, eine Vorrichtung und ein Verfahren für eine Übergabe von Zuschnitten zu schaffen, welche ein möglichst genaues und/oder schlupffreies Übergeben der Zuschnitte an eine Übergabestrecke ermöglichen.

Gelöst wird diese Aufgabe durch eine Vorrichtung gemäß Anspruch 1 und ein Verfahren gemäß Anspruch 10. Vorteilhafte Ausgestaltungen ergeben sich aus den Unteransprüchen.

Gemäß einem ersten Aspekt wird eine Vorrichtung für eine Übergabe von Zuschnitten an eine Übergabestrecke, insbesondere für eine Übergabe von Zuschnitten an eine Materialbahn, eine Transportbahn, eine rotierende Walze und/oder an entlang einer Transportstrecke transportierte Produkte, geschaffen, die Vorrichtung umfassend ein Positioniersystem mit mindestens zwei, insbesondere drei oder mehr, entlang einer umlaufenden Bahn, insbesondere entlang einer Kreisbahn, bewegbaren Schlitten und mit einem Antriebssystem, wobei die Schlitten jeweils eine Produktaufnahme aufweisen und eingerichtet sind, um jeweils einen Zuschnitt an der Produktaufnahme aufzunehmen, den Zuschnitt ortsfest an der Produktaufnahme gehalten zu transportieren, und den Zuschnitt an die Übergabestrecke zu übergeben, und wobei das Antriebssystem eingerichtet ist, um die Schlitten entlang der umlaufenden Bahn zumindest abschnittsweise unabhängig voneinander zu bewegen.

Gemäß einem zweiten Aspekt wird ein Verfahren für eine Übergabe von Zuschnitten an eine Übergabestrecke, insbesondere für eine Übergabe von Zuschnitten an eine Materialbahn, eine Transportbahn, eine Walze und/oder an entlang einer Transportstrecke transportierte Produkte, geschaffen, umfassend Bereitstellen eines Positioniersystem mit mindestens zwei, insbesondere drei oder mehr, entlang einer umlaufenden Bahn bewegbaren, jeweils eine Produktaufnahme aufweisenden Schlitten, und Aufnehmen, Transportieren und Übergeben der Zuschnitte mit den die Produktaufnahmen aufweisenden Schlitten des Positioniersystems, wobei die Schlitten entlang der umlaufenden Bahn zumindest abschnittsweise unabhängig voneinander bewegt werden.

Das Positioniersystem ersetzt dabei eine herkömmliche, für eine Übergabe eingesetzte Vakuumtransferwalze.

Die unabhängige Bewegung der Schlitten erlaubt es, die Bewegung der Schlitten bei einer Auf- oder Übernahme der Zuschnitte mit einer Geschwindigkeit einer die Zuschnitte für das Positioniersystem bereitstellenden Einrichtung für eine schlupffreie Übergabe zu synchronisieren. Üblicherweise handelt es sich bei der bereitstellenden Einrichtung um eine drehende Walze, insbesondere eine Vakuumwalze. Aufgrund der unabhängigen Bewegung der Schlitten ist es jedoch auch denkbar, die Zuschnitte von einem stationär angeordnete Vorrat zu übernehmen.

Die unabhängige Bewegung der Schlitten erlaubt es ebenso, die Schlitten bei der Übergabe der Zuschnitte an die Übergabestrecke mit einer Geschwindigkeit der Übergabestrecke zu synchronisieren.

Die Vorrichtung und das Verfahren sind damit insbesondere für eine präzise und verzugsfreie Übergabe von Zuschnitten aus empfindlichen Materialien mit hohen Taktzeiten geeignet.

In Ausgestaltungen ist das Antriebssystem eingerichtet, um für ein Aufnehmen und/oder ein Übergeben jedes Zuschnitts eine Geschwindigkeit des zugeordneten Schlittens und/oder eine Position des zugeordneten Schlittens entlang der umlaufenden Bahn individuell anzupassen.

Die unabhängige Bewegung der Schlitten erlaubt eine individuelle Anpassung für jeden Zuschnitt. Dadurch ist es möglich, einen Zeitpunkt der Übergabe jedes Zuschnitts und somit eine Position des Zuschnitts an der Übergabestrecke individuell anzupassen. Durch die Möglichkeit einer individuellen Anpassung können so Fehler im Vorfeld vermieden werden. Die individuelle Anpassung erlaubt auch eine Anpassung an sprunghafte Abweichungen, beispielsweise in einem Spleißbereich einer Materialbahn. Insbesondere auch beim Anfahren einer Produktionsanlage können so unerwünschte Mengen an Ausschuss verhindert werden.

In einer Ausgestaltung ist ein Sensorsystem vorgesehen, das eingerichtet ist, um eine Position und/oder Orientierung der Zuschnitte an der jeweiligen Produktaufnahme zu erfassen. Das Sensorsystem ist dabei in Ausgestaltungen eingerichtet, um eine Position des Zuschnitts relativ zu einer Bewegungsrichtung entlang der umlaufenden Bahn zu erfassen. In Ausgestaltungen ist das Sensorsystem weiter eingerichtet, um eine Position quer zu der Bewegungsrichtung der umlaufenden Bahn und/oder eine Orientierung des Zuschnitts zu erfassen.

Für eine ggf. notwendige Korrektur der Position und/oder der Orientierung des Zuschnitts vor dessen Übergabe an die Übergabestrecke weisen die Schlitten in Ausgestaltungen jeweils ein Verstellsystem auf, das eingerichtet ist, um die jeweilige Produktaufnahme vor oder bei einem Übergeben an die Übergabestrecke quer zu einer Bewegungsrichtung entlang der umlaufenden Bahn zu verschieben und/oder um eine Normalachse, also die Hochachse, zu der Bewegungsrichtung zu verdrehen. Das Verstellsystem ist dabei je nach Anwendungsfall durch den Fachmann geeignet gestaltbar. In Ausgestaltungen sind die Produktaufnahmen beispielsweise mit kompakten linearen und/oder rotativen piezoelektrischen Stellmotoren ausgestattet, die höchste Präzision im Nanometerbereich erlauben. Es sind jedoch auch andere Verstellsysteme denkbar.

Die Produktaufnahmen sind je nach verarbeitetem Material geeignet gestaltet, um die Zuschnitte ortsfest zu halten. In Ausgestaltungen erfolgt ein Halten mittels elektrostatischer Anhaftung. Alternativ oder zusätzlich umfassen die Produktaufnahmen in Ausgestaltungen für ein ortsfestes Halten der Zuschnitte an den Produktaufnahmen jeweils eine poröse und/oder Öffnungen aufweisenden Saugfläche, welche mit einer Unterdruckquelle verbunden ist.

In Ausgestaltungen ist vorgesehen, dass die Schlitten entlang einer als Kreisbahn gestalteten, umlaufenden Bahn um eine zentrale Achse bewegbar sind.

Für eine individuelle Bewegung der Schlitten ist das Antriebssystem in Ausgestaltungen als Linearmotorsystem gestaltet, wobei die Schlitten jeweils an einem Läufer des Linearmotorsystems angebracht sind. Eine umlaufende Bahn ist dabei mit einer beliebigen, an den jeweiligen Anwendungsfall angepassten Form realisierbar.

In anderen Ausgestaltungen umfasst das Antriebssystem mehrere, jeweils einem Schlitten zugeordnete Motoren, insbesondere Elektromotoren, weiter insbesondere Servomotoren. In Ausgestaltungen sind die Motoren insbesondere als koaxial angeordnete Torquemotoren gestaltet, wobei die Schlitten jeweils an Rotoren der Torquemotoren angebracht sind. Als Torquemotor wird ein hochpoliger, elektrischer Direktantrieb bezeichnet. Die Torquemotoren sind je nach Anwendungsfall als Außenläufer-Torquemotor mit einem äußeren Rotorring oder als Innenläufer mit einem inneren Rotorring gestaltet. Die umlaufende Bahn, entlang welcher die Schlitten bewegt werden, ist dabei eine Kreisbahn. Die Torquemotoren sind in einer Ausgestaltung in Längsrichtung einer Montageschiene hintereinander angeordnet. Die Schlitten sind jeweils über einen geeigneten Schwenkarm an dem Rotor angebracht, wobei die Form der Schwenkarme derart gestaltet ist, dass die Schlitten in einer gemeinsamen Spur entlang der Kreisbahn bewegt werden.

In einer Ausgestaltung ist vorgesehen, dass innerhalb der umlaufenden Bahn, insbesondere koaxial zu der zentralen Achse der als Kreisbahn gestalteten umlaufenden Bahn, ein Medienkanal vorgesehen ist. Die in dem Medienkanal geführten Medien, sind insbesondere Medien wie Strom, Datensignale, Druckluft, Unterdruck oder dergleichen, welche für die Bewegung der Schlitten und/oder der Produktaufnahmen und/oder ein Halten der Zuschnitte an den Produktaufnahmen erforderlich sind. Dabei ist insbesondere in Ausgestaltungen vorgesehen, dass die Schlitten und/oder Elemente des Antriebssystems mittels einer Schleifringanordnung mit dem Medienkanal für einen Medienübergabe verbunden sind.

Insbesondere ist in Ausgestaltungen für eine Versorgung der Schlitten mit Unterdruck und/oder Druckluft (Überdruck) vorgesehen, dass eine Montageschiene, an welcher insbesondere Torquemotoren für einen Antrieb der Schlitten angeordnet sind, Bereiche aufweist, in denen zylindrische Kammern die Montageschiene umschließen und an dieser fest angebracht sind. Die zylindrischen Kammern sind mit Unterdruck, bzw. Überdruck versorgt. An Außenseiten der zylindrischen Kammern ist eine dichtende Gleitfläche an der Transferkörper umläuft, der fest mit den Schlitten und/oder den Schwenkarmen verbunden ist. Der Transferkörper ist insbesondere als Torus und/oder als toroidaler Kanal mit rechteckigem Querschnitt gestaltet. Über Öffnungen in der dichtenden Gleitfläche und einer der Gleitfläche zu gewandten Innenseite des Transferkörpers gelangen Unterdruck bzw. Überdruck in den Transferkörper. Über Kanäle können der Unterdruck bzw. der Überdruck von dem Transferkörper zu den Produktaufnahmen und/oder Aktuatoren des Schlittens gelangen. Die Löcher in der zylindrischen Kammer und an der Innenseite des Transferkörpers sind dabei je nach Anwendungsfall so angeordnet sein, dass eine Versorgung der Schlitten über den gesamten Bereich (360°) stattfindet oder nur über einen eingeschränkten Winkelbereich, insbesondere einen Winkelbereich, der beispielsweise für eine Unterdruckversorgung der Produktaufnahmen wichtig ist.

In Ausgestaltungen ist eine Vakuumwalze vorgesehen, wobei das Positioniersystem und die Vakuumwalze einen Übergabespalt bilden und eingerichtet sind, um Zuschnitte von der Vakuumwalze an das Positioniersystem im Bereich des Übergabespalts zu übertragen. Für eine sichere Übergabe weist die Vakuumwalze in Ausgestaltungen eine relativ zur Drehrichtung der Vakuumwalze verstellbare Schwenkniere auf, über welche ein Unterdruck an einer Mantelfläche der Vakuumwalze bereitstellbar ist.

Für ein Übertragen eines Zuschnitts von der Vakuumwalze an das Positioniersystem ist dabei in Ausgestaltungen vorgesehen, dass die Schwenkniere entgegen einer Drehrichtung der Vakuumwalze verschwenkt wird, sodass ein Unterdruck im Bereich des Übergabespalts reduziert oder unterbrochen wird, dadurch wird der Zuschnitt von der Vakuumwalze freigegeben. Dabei ist weiter insbesondere in Ausgestaltungen vorgesehen, dass die Schwenkniere nach dem Übertragen mit der Vakuumwalze in eine Ausgangslage zurückverschwenkt wird, sodass ein nachfolgender Zuschnitt sicher zu dem Übergabespalt geführt wird.

Die Vakuumwalze bildet in Ausgestaltungen mit einer Schneidwalze einen Schneidspalt, wobei mittels der Schneidwalze Schnitte in eine zugeführte Materialbahn eingebracht werden, um die Zuschnitte zu erzeugen. Die Schneidwalze ist dabei insbesondere oberhalb der Vakuumwalze angeordnet. In anderen Ausgestaltungen ist die Vakuumwalze als Vakuum-Schneidwalze gestaltet, wobei die Vakuum-Schneidwalze mit einem Gegenstanzzylinder zusammenwirkt. Die Vakuum-Schneidwalze ist dabei insbesondere unterhalb des Gegenstanzzylinders angeordnet. In wieder anderen Gestaltungen wird der Vakuumwalze eine Trägerbahn mit daran angeordneten Zuschnitten zugeführt, wobei die Trägerbahn an der Vakuumwalze von den Zuschnitten delaminiert wird. Die Erfindung ist nicht auf diese Gestaltungen beschränkt und es sind weitere Gestaltungen denkbar, bei welchem mittels einer Vakuumwalze dem Positioniersystem Zuschnitte bereitgestellt werden.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen:
- Fig. 1: ein Ausführungsbeispiel einer Vorrichtung für eine Übergabe von Zuschnitten umfassend ein Positioniersystem, und
- Fig. 2: ein Positioniersystem ähnlich Fig. 1 in einer geschnittenen Darstellung.

### DETAILLIERTE BESCHREIBUNG DER AUSFÜHRUNGSBEISPIELE

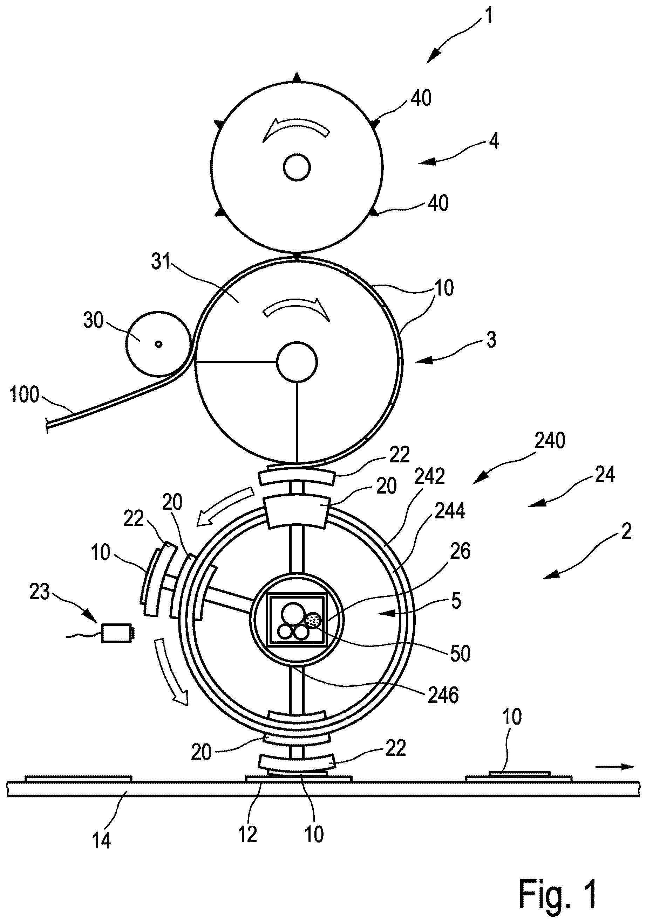

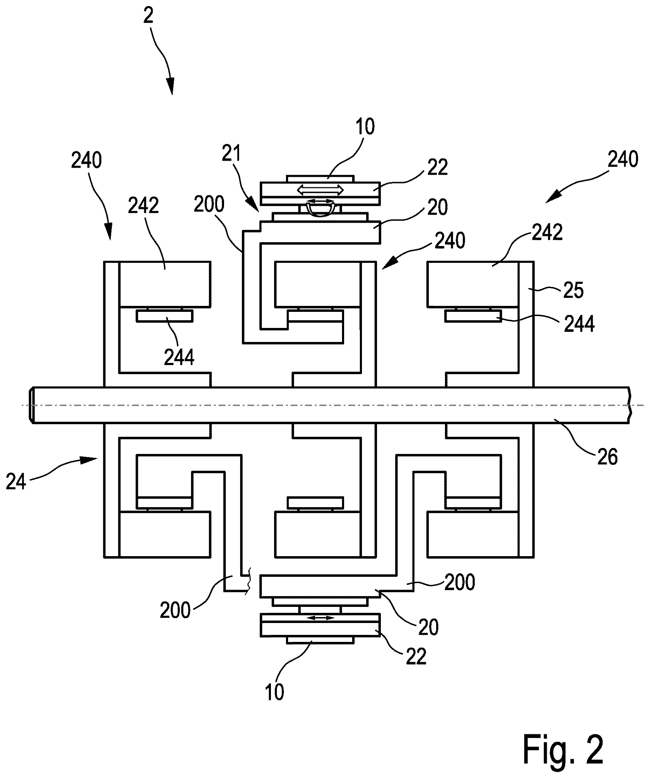

Fig. 1 zeigt schematisch ein Ausführungsbeispiel einer Vorrichtung 1 für eine Übergabe von Zuschnitten 10 an eine Übergabestrecke umfassend ein Positioniersystem 2. Fig. 2 zeigt schematisch ein Positioniersystem 2 ähnlich Fig. 1 in einer geschnittenen Darstellung. Für gleiche oder ähnliche Bauteile oder Elemente werden in den Zeichnungen übereinstimmende Bezugszeichen verwendet.

In dem in Fig. 1 dargestellten Anwendungsfall dient die Vorrichtung 1 für eine Übergabe der Zuschnitte 10 an entlang einer Transportstrecke transportierte Produkten 12, welche mittels einer Transportbahn 14 transportiert werden. Der dargestellte Anwendungsfall ist jedoch lediglich beispielhaft und in alternativen Ausgestaltungen werden die Zuschnitte beispielsweise unmittelbar auf der Transportbahn 14 oder mittelbar oder unmittelbar auf einer Materialbahn

(nicht dargestellt) für ein in der Bahn hergestelltes Produkt oder mittelbar oder unmittelbar auf einer rotierenden Walze (nicht dargestellt) abgelegt.

Die dargestellte Vorrichtung 1 umfasst das Positioniersystem 2, eine oberhalb des Positioniersystems 2 angeordnete Vakuumwalze 3 und eine oberhalb der Vakuumwalze 3 angeordnete Schneidwalze 4.

Die Zuschnitte 10 werden von der Vakuumwalze 3 an das Positioniersystem 2 übergeben und von dem Positioniersystem 2 an eine Übergabestrecke, im dargestellten Ausführungsbeispiel an die entlang der Transportstrecke transportierten Produkte 12, übergeben.

Die in Fig. 1 dargestellte Vorrichtung 1 umfasst weiter die Schneidwalze 4. Dabei werden die Zuschnitte 10 mittels der Vakuumwalze 3 und der Schneidwalze 4 aus einer Materialbahn 100 erzeugt. Die Materialbahn 100, aus der die Zuschnitte 10 erzeugt werden, wird an die Vakuumwalze 3 in dem dargestellten Ausführungsbeispiel mittels einer Andrückwalze 30 angelegt. Die Schneidwalze 4 umfasst mehrere Schneidkanten 40, auch als Messer bezeichnet, welche die durch einen Schneidspalt zwischen der Vakuumwalze 3 und der Schneidwalze 4 geführte Materialbahn 100 in Zuschnitte 10 trennt. Die Vakuumwalze 3 und die Schneidwalze 4 drehen mit gegensinnigem Drehsinn. In dem dargestellten Ausführungsbeispiel dreht die Vakuumwalze 3 im Uhrzeigersinn. Die dargestellte Drehrichtung ist jedoch lediglich beispielhaft.

Die Vakuumwalze 3 ist an ihrer Mantelfläche mit einer porösen oder löchrigen Oberfläche versehen und weist somit Öffnungen auf, durch welche Unterdruck bereitgestellt wird. Die Vakuumwalze 3 und/oder die Schneidwalze 4 sind insbesondere in Ausgestaltungen mit einer löchrigen Oberfläche derart ausgelegt, dass die Schneidkanten 40 nicht auf Öffnungen an der Mantelfläche der Vakuumwalze 3 treffen. Dadurch kann ein präzises Durchtrennen sichergestellt werden.

Um einen beim Erzeugen der Zuschnitte 10 anfallenden Rest klein zu halten, werden die Zuschnitte 10 in Ausgestaltungen insbesondere derart erzeugt, dass die Zuschnitte 10 an der Vakuumwalze 3 wie schematisch in Fig. 1 dargestellt lückenlos aneinandergereiht sind oder nur einen geringen Abstand zueinander haben. Für eine Übergabe der Zuschnitte 10 an die Übergabestrecke ist dabei insbesondere vorgesehen, einen Abstand zwischen den Zuschnitten 10 zu erzeugen oder einen bereits vorhandenen Abstand zu verändern, insbesondere zu vergrößern.

Das Positioniersystem 2 umfasst zu diesem Zweck mindestens zwei, in dem dargestellten Ausführungsbeispiel drei Schlitten 20 mit jeweils einer Produktaufnahme 22 und ein Antriebssystem 24 für eine zumindest abschnittsweise unabhängige Bewegung der Schlitten 20 entlang einer umlaufenden Bahn, im dargestellten Ausführungsbeispiel entlang einer Kreisbahn. Die Bewegung der Schlitten 20 erfolgt im Ausführungsbeispiel wie schematisch durch Pfeile dargestellt gegen den Uhrzeigersinn, wobei die Produkte 12 entlang der Transportstrecke wie schematisch durch einen Pfeil dargestellt in der Figur von links nach rechts transportiert werden. Die dargestellten Bewegungsrichtungen sind jedoch nur beispielhaft.

Die Schlitten 20 mit den Produktaufnahmen 22 sind jeweils eingerichtet, um einen Zuschnitt 10 von der Vakuumwalze 3 zu übernehmen, den übernommenen Zuschnitt 10 an der Produktaufnahme 22 für einen Transport ortsfest zu halten, und den Zuschnitt 10 für eine Übergabe an die Übergabestrecke freizugeben. Die Produktaufnahmen 22 sind in Ausgestaltungen zu diesem Zweck mit einer porösen und/oder Öffnungen aufweisenden Saugfläche versehen, welche mit einer Unterdruckquelle (nicht dargestellt) verbunden ist.

Das dargestellte Antriebssystem 24 ist eingerichtet, um die Schlitten 20 zumindest abschnittsweise unabhängig voneinander zu bewegen.

Das Antriebssystem 24 ist insbesondere eingerichtet, um die Schlitten 20 mit ihren Produktaufnahmen 22 beim Abholen der Zuschnitte 10 von der Vakuumwalze 3 mit der Umfangsgeschwindigkeit der Zuschnitte 10 an der Vakuumwalze 3 zu synchronisieren, so dass eine schlupffreie Übergabe erfolgen kann. Für eine sichere Übergabe und ein Fixieren der Zuschnitte 10 an der Produktaufnahme 22 sind die Produktaufnahmen 22 wie oben beschrieben mit Saugflächen ausgestattet.

In dem dargestellten Ausführungsbeispiel weist die Vakuumwalze 3 für eine sichere Übergabe der Zuschnitte 10 an die Schlitten 20 eine schematisch dargestellte Schwenkniere 31 auf, über welche an der Mantelfläche der Vakuumwalze 3 ein Unterdruck bereitgestellt wird. Die Schwenkniere 31 der Vakuumwalze 3 erstreckt sich - verglichen mit einer Uhr - über einen Bereich von ca. 9 Uhr über 12 Uhr bis ca. 6 Uhr. Wenn die Schwenkniere 31 entgegen dem Drehsinn der Vakuumwalze 3, in dem dargestellten Ausführungsbeispiel entgegen dem Uhrzeigersinn um beispielsweise einen Winkelbereich zwischen ca. 3 Minuten bis ca. 15 Minuten, beispielsweise ca. zehn Minuten verschwenkt wird, wird der in diesem Bereich aufliegende Zuschnitt 10 von der Vakuumwalze 3 freigegeben. Ein Winkelbereich, um welchen die Schwenkniere 31 bewegt wird, kann dabei durch den Fachmann in Abhängigkeit einer Größe des Zuschnitts 10 und eines Durchmessers der Vakuumwalze 3 geeignet gewählt werden. Nach einer Freigabe eines Zuschnitts und Transfer des Zuschnitts 10 an den Schlitten 10 des Positioniersystems 2 fährt die Schwenkniere 30 wieder synchron mit der Vakuumwalze 3 bis zu einem Übergabespalt zwischen der Vakuumwalze 3 und dem Positioniersystem 2 bei ca. 6 Uhr vor, um den nächsten Zuschnitt 10 bis zum Übergabespalt an der Vakuumwalze 3 zu fixieren.

Nach einer Übernahme eines Zuschnitts 10 wird der zugehörige Schlitten 20 entlang der umlaufenden Bahn bewegt, um die Zuschnitte an die Übergabestrecke zu übertragen. In dem dargestellten Ausführungsbeispiel werden die Schlitten 20 entgegen dem Uhrzeigersinn entlang der als Kreisbahn gestalteten umlaufenden Bahn um ca. 180° verfahren.

Bei der Bewegung in Richtung der Übergabestrecke wird für jeden Zuschnitt 10 eine Geschwindigkeit des zugehörigen Schlittens 20 so verändert, dass der jeweils aufgenommene Zuschnitt 10 an die Übergabestrecke positionsgenau, beispielweise bezüglich eines Produkts 12, und mit synchroner Geschwindigkeit zu der Übergabestrecke übergeben werden kann. Beim Übergeben des Zuschnitts an die Übergabestrecke wird ein an der Saugfläche der Produktaufnahme 22 aufgebrachter Unterdruck reduziert, so dass die Zuschnitte 10 von der Produktaufnahme 22 freigegeben werden.

Für eine exakte Positionierung der Zuschnitte 10 an der Übergabestrecke ist in dem dargestellten Ausführungsbeispiel ein Sensorsystem 23 vorgesehen. Das Sensorsystem 23 ist in Ausgestaltungen eingerichtet, um zumindest eine Position des Zuschnitts 10 an der Produktaufnahme 22 in Bewegungsrichtung des Schlittens 10 entlang der umlaufenden Bahn zu erfassen.

In Ausgestaltungen ist das Sensorsystem 23 zudem eingerichtet, um eine Position des Zuschnitts 10 an der Produktaufnahme 22 quer zur Bewegungsrichtung und/oder eine Orientierung des Zuschnitts 10 an der Produktaufnahme 22 zu erfassen.

Für eine Korrektur einer Position des Zuschnitts 10 quer zur Bewegungsrichtung und/oder einer Orientierung des Zuschnitts 10 ist in Ausgestaltungen ein schematisch in Fig. 2 dargestelltes Verstellsystem 21 vorgesehen, das eingerichtet ist, um die jeweilige Produktaufnahme 22 vor oder bei einem Übergeben des Zuschnitts wie schematisch durch Pfeile angedeutet quer zu der Bewegungsrichtung zu verschieben und/oder um eine Normalachse zu der Bewegungsrichtung zu verdrehen. Ein Erfassen einer Position und/oder Orientierung des Zuschnitts 10 und eine etwaige Korrektur sind dabei für jeden Zuschnitt 10 individuell möglich. Dadurch ist eine sehr präzise Übergabe der Zuschnitte an die Übergabestrecke möglich und Fehler können im Vorfeld vermieden werden.

Für eine zumindest abschnittsweise unabhängige Bewegung der Schlitten 20 umfasst das Antriebssystem 24 in dem in den Fig. 1 und 2 dargestellten Ausführungsbeispielen sogenannte Torquemotoren 240, wobei jedem Schlitten 20 ein Torquemotor 240 zugeordnet ist.

Wie am besten in Fig. 2 erkenntlich, umfassen die dargestellten Torquemotoren 240 jeweils einen außenliegenden Statorring 242 und einen innenliegenden Rotorring 244. Für eine Montage der Torquemotoren 240 ist eine Montageschiene 26 vorgesehen, wobei die Torquemotoren 240 mittels Statoraufnahmen 25 in Längsrichtung der Montageschiene 26 nebeneinander an der Montageschiene 26 befestigt sind. Die Schlitten 20 mit den Positionsaufnahmen 22 sind jeweils an einem Rotorring 244 befestigt, sodass die Schlitten 20 mit dem zugehörigen Rotorring 244 rotieren.

In dem in Fig. 2 dargestellten Positioniersystem 2 sind Schwenkarme 200, mittels welcher die Schlitten 20 mit den jeweiligen Rotorringen 244 verbunden sind, derart gestaltet, dass alle Schlitten 20 in einer Spur laufen.

Wie schematisch in Fig. 1 dargestellt, ist in Ausgestaltungen die Montageschiene 26 hohl gestaltet, so dass diese als Medienkanal 5 für in schematisch dargestellten Leitungen 50 geführte Medien nutzbar ist. Der Medienkanal 5 dient insbesondere einer Zufuhr von Medien, wie Strom, Datensignale, Druckluft, Unterdruck oder dergleichen, wobei die Medien für die Bewegung der Schlitten 20 und/oder der Produktaufnahmen 22 und/oder ein Halten der Zuschnitte 10 an den der Produktaufnahmen 22 erforderlich sind. Die Medien, insbesondere Strom und/oder Datensignale sind in Ausgestaltungen über eine in Fig. 1 schematisch dargestellte Schleifringanordnung 246 an die Schlitten 20 angebunden. Für eine Versorgung der Schlitten 20 und/oder der Produktaufnahmen 22 mit Unterdruck und/oder Überdruck sind in Ausgestaltungen Drehdurchführungen vorgesehen. In Ausgestaltungen sind Drehdurchführungen und Schleifringe in gemeinsamen Bauteilen integriert.

In dem in Fig. 1 dargestellten Ausführungsbeispiel werden die Zuschnitte 10 an der Vakuumwalze 3 mittels der damit zusammenwirkenden Schneidwalze 4 erzeugt.

Diese Gestaltung ist jedoch lediglich beispielhaft. Je nach Anwendungsgebiet und Produktmerkmalen in sind andere Gestaltungen denkbar.

In einer abgewandelten Ausgestaltung ist beispielsweise die Vakuumwalze 3 als Vakuum-Schneidwalze gestaltet, welche mit einem Gegenstanzzylinder einen Schneidspalt zum Erzeugen der Zuschnitte bildet. Ein beim Stanzen zwischen der Vakuum-Schneidwalze und dem Gegenstanzzylinder entstehendes Restegitter wird dabei in Ausgestaltungen durch eine Anzugsvorrichtung aus dem Schneidspalt entfernt. Eine entsprechende Gestaltung ist insbesondere, jedoch nicht ausschließlich, für den Bereich der Herstellung medizinischer Wundauflagen vorteilhaft.

In einer weiteren abgewandelten Ausgestaltungen wird eine bereits geschnittene Materialbahn auf einer Trägerbahn der Vakuumwalze 3 zugeführt. In anderen Worten wird eine Trägerbahn mit daran anhaftenden Zuschnitten der Vakuumwalze 3 zugeführt. In diesem Fall wird die Trägerbahn mit den Zuschnitten 10 an die Vakuumwalze 3 angelegt, so dass die Zuschnitte 10 durch den aufgebrachten Unterdruck an der Vakuumwalze gehalten werden. Anstelle einer Schneidwalze 4 gemäß Fig. 1 ist eine Delaminationsvorrichtung vorgesehen, durch welche die Trägerbahn, die sich an der Außenseite der Zuschnitte 10 befindet, abgezogen wird, so dass die Zuschnitte frei auf der Oberfläche der Vakuumwalze 3 anliegen. Eine derartige Gestaltung ist insbesondere, aber nicht ausschließlich, bei einer Verarbeitung von Membranen, wie sie in Brennstoffzellen, Elektrolyseuren, Batterien, Membranbefeuchtern vorkommen, vorteilhaft.

Auch bei diesen Ausgestaltungen werden vereinzelte Zuschnitte auf einer Vakuumwalze für die Übertragung an das Positioniersystem 2 bereitgestellt. Weiter ist es aber auch denkbar, die Zuschnitte 10 in einem Vorrat stationär bereitzustellen, wobei der Schlitten 20 für eine Übernahme zum Stillstand gebracht wird.

## Patentansprüche

1. Vorrichtung für eine Übergabe von Zuschnitten (10) an eine Übergabestrecke, insbesondere für eine Übergabe von Zuschnitten (10) an eine Materialbahn, eine Transportbahn (14), eine rotierende Walze und/oder an entlang einer Transportstrecke transportierte Produkte (12),
die Vorrichtung (1) umfassend ein Positioniersystem (2) mit mindestens zwei, insbesondere drei oder mehr, entlang einer umlaufenden Bahn bewegbaren Schlitten (20) und mit einem Antriebssystem (24),
wobei die Schlitten (20) jeweils eine Produktaufnahme (22) aufweisen und eingerichtet sind, um jeweils einen Zuschnitt (10) an der Produktaufnahme (22) aufzunehmen, den Zuschnitt (10) ortsfest an der Produktaufnahme gehalten zu transportieren, und den Zuschnitt (10) an die Übergabestrecke zu übergeben, und
wobei das Antriebssystem (24) eingerichtet ist, um die Schlitten (20) entlang der umlaufenden Bahn zumindest abschnittsweise unabhängig voneinander zu bewegen.

2. Vorrichtung nach Anspruch 1, **dadurch gekennzeichnet, dass** das Antriebssystem (24) eingerichtet ist, um für ein Aufnehmen und/oder ein Übergeben jedes Zuschnitts (10) eine Geschwindigkeit des zugeordneten Schlittens (20) und/oder eine Position des zugeordneten Schlittens (20) entlang der umlaufenden Bahn individuell anzupassen.

3. Vorrichtung nach Anspruch 1 oder 2, **dadurch gekennzeichnet, dass** ein Sensorsystem (23) vorgesehen ist, das eingerichtet ist, um eine Position und/oder Orientierung der Zuschnitte (10) an der jeweiligen Produktaufnahme (22) zu erfassen.

4. Vorrichtung nach Anspruch 1, 2 oder 3, **dadurch gekennzeichnet, dass** die Schlitten (20) jeweils ein Verstellsystem (21) aufweisen, das eingerichtet ist, um die jeweilige Produktaufnahme (22) vor oder bei einem Übergeben an die Übergabestrecke zu verschieben, insbesondere quer zu einer Bewegungsrichtung entlang der umlaufenden Bahn zu verschieben, und/oder zu verdrehen, insbesondere um eine Normalachse zu der Bewegungsrichtung zu verdrehen.

5. Vorrichtung nach einem der Ansprüche 1 bis 4 **dadurch gekennzeichnet, dass** die Produktaufnahmen (22) jeweils eine poröse und/oder Öffnungen aufweisenden Saugfläche umfassen, welche mit einer Unterdruckquelle verbunden ist.

6. Vorrichtung nach einem der Ansprüche 1 bis 5, **dadurch gekennzeichnet, dass** die Schlitten (20), insbesondere mittels des Antriebssystems (24), entlang einer als Kreisbahn gestalteten, umlaufenden Bahn um eine zentrale Achse bewegbar sind.

7. Vorrichtung nach einem der Ansprüche 1 bis 6, **dadurch gekennzeichnet, dass** das Antriebssystem (24) mehrere, jeweils einem Schlitten (20) zugeordnete Motoren umfasst, insbesondere koaxial angeordnete Torquemotoren (240), wobei die Schlitten (20) an Rotoren (244) der Torquemotoren (240) angebracht sind.

8. Vorrichtung nach einem der Ansprüche 1 bis 7, **dadurch gekennzeichnet, dass** innerhalb der umlaufenden Bahn, insbesondere koaxial zu der zentralen Achse der als Kreisbahn gestalteten umlaufenden Bahn, ein Medienkanal (5) vorgesehen ist, wobei insbesondere die Schlitten (20) und/oder Elemente des Antriebssystems (24) mittels eines Schleifringsystems (246) mit dem Medienkanal für einen Medienübergabe verbunden sind.

9. Vorrichtung nach einem der Ansprüche 1 bis 7, **dadurch gekennzeichnet, dass** die Vorrichtung eine Vakuumwalze (3) umfasst, wobei das Positioniersystem (2) und die Vakuumwalze (3) einen Übergabespalt bilden und eingerichtet sind, um Zuschnitte (10) von der Vakuumwalze (3) an das Positioniersystem (2) im Bereich des Übergabespalts zu übertragen, wobei insbesondere die Vakuumwalze (3) eine relativ zur Drehrichtung der Vakuumwalze (3) verstellbare Schwenkniere (31) umfasst, über welche ein Unterdruck an einer Mantelfläche der Vakuumwalze (3) bereitstellbar ist.

10. Verfahren für eine Übergabe von Zuschnitten (10) an eine Übergabestrecke, insbesondere für eine Übergabe von Zuschnitten (10) an eine Materialbahn, eine Transportbahn (14), eine Walze und/oder an entlang einer Transportstrecke transportierte Produkte (12), umfassend
Bereitstellen eines Positioniersystem (2) mit mindestens zwei, insbesondere drei oder mehr, entlang einer umlaufenden Bahn bewegbaren, jeweils eine Produktaufnahme (22) aufweisenden Schlitten (20), und
Aufnehmen, Transportieren und Übergeben der Zuschnitte (10) mit den die Produktaufnahmen (22) aufweisenden Schlitten (20) des Positioniersystems (2), wobei die Schlitten (20) entlang der umlaufenden Bahn zumindest abschnittsweise unabhängig voneinander bewegt werden.

11. Verfahren nach Anspruch 10, **dadurch gekennzeichnet, dass** für ein Aufnehmen und/oder ein Übergeben jedes Zuschnitts (10) eine Geschwindigkeit des zugeordneten Schlittens (20) und/oder eine Position des zugeordneten Schlittens (20) entlang der umlaufenden Bahn individuell angepasst wird.

12. Verfahren nach Anspruch 10 oder 11, **dadurch gekennzeichnet, dass** eine Position und/oder Orientierung der Zuschnitte (10) an der jeweiligen Produktaufnahme (22) mit einem Sensor (23) erfasst wird.

13. Verfahren nach Anspruch 10, 11 oder 12, **dadurch gekennzeichnet, dass** vor oder bei einem Übergeben zumindest eines Zuschnitts (10) für eine Veränderung einer Position und/oder einer Orientierung dieses Zuschnitts (10) an dem zugeordneten Schlitten (20) die zugehörige Produktaufnahme (22) quer zu einer Bewegungsrichtung entlang der umlaufenden Bahn verschoben und/oder um eine Normalachse zu der Bewegungsrichtung verdreht wird.

14. Verfahren nach einem der Ansprüche 10 bis 13, **dadurch gekennzeichnet, dass** die die Zuschnitte (10) von einer Vakuumwalze (3) an die Schlitten (20) des Positioniersystems (2) an einem Übergabespalt übertragen werden.

15. Verfahren nach Anspruch 14, **dadurch gekennzeichnet, dass** die Vakuumwalze (3) eine relativ zur Drehrichtung der Vakuumwalze (3) verschwenkbare Schwenkniere (31) umfasst, über welche ein Unterdruck an einer Mantelfläche der Vakuumwalze (3) bereitgestellt wird, wobei die Schwenkniere (31) bei einem Übertragen der Zuschnitte (10) jeweils entgegen einer Drehrichtung der Vakuumwalze (3) verschwenkt wird, sodass ein Unterdruck im Bereich des Übergabespalts reduziert oder unterbrochen wird, wobei die Schwenkniere (31) insbesondere nach dem Übertragen mit der Vakuumwalze (3) in eine Ausgangslage zurückverschwenkt wird.
